(19) Europäisches Patentamt
European Patent Office
Office européen des brevets

(11) EP 4 744 802 A1

(12) EUROPEAN PATENT APPLICATION
published in accordance with Art. 153(4) EPC

(43) Date of publication:
20.05.2026 Bulletin 2026/21

(21) Application number: 24839582.4

(22) Date of filing: 02.07.2024

(51) International Patent Classification (IPC):
$B22F\ 1/06$ (2022.01)    $B22F\ 1/00$ (2022.01)
$B22F\ 1/052$ (2022.01)    $B22F\ 9/08$ (2006.01)
$B22F\ 10/28$ (2021.01)    $B22F\ 10/34$ (2021.01)
$B33Y\ 10/00$ (2015.01)    $B33Y\ 70/00$ (2020.01)
$C22C\ 9/00$ (2006.01)

(52) Cooperative Patent Classification (CPC):
Y02P 10/25

(86) International application number:
PCT/JP2024/023867

(87) International publication number:
WO 2025/013690 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.07.2023 JP 2023112914

(71) Applicant: Mitsui Kinzoku Company, Limited
Tokyo 141-8584 (JP)

(72) Inventors:
• KITAGAWA Akira
  Hida-shi, Gifu 506-1114 (JP)
• OMURA Jun
  Hida-shi, Gifu 506-1114 (JP)

(74) Representative: Meissner Bolte Nürnberg
Patentanwälte Rechtsanwälte
Partnerschaft mbB
Bankgasse 3
90402 Nürnberg (DE)

(54) **METAL POWDER, METHOD FOR PRODUCING METAL POWDER, AND METHOD FOR PRODUCING LAMINATED MOLDED ARTICLE USING METAL POWDER**

(57) [Object of the present invention]
To provide a metal powder that has high flowability and high packing property, and is capable of forming a powder bed with a uniform thickness by squeegeeing.
[Means for solving the object]
The metal powder for additive manufacturing according to the present invention having an aspect ratio, which is a value obtained by dividing a minor axis by a major axis of the metal powder, is 0.60 or more and 0.88 or less; and a degree of uniformity represented by the formula (d90 - d10) / d50 is 1.8 or less.

EP 4 744 802 A1

**Description**

[TECHNICAL FIELD]

The present invention relates to a metal powder, more specifically to a metal powder suitably usable for additive manufacturing such as three-dimensional additive manufacturing, a process for manufacturing the metal powder, and a process for producing an additive manufactured object using the metal powder.

[BACKGROUND OF THE INVENTION]

The popularization of three-dimensional additive manufacturing equipment, so-called 3D printers, capable of rapidly fabricating components with complex three-dimensional shapes, is progressing. Among the process for producing additive manufactured objects using such three-dimensional fabrication equipment, the Powder Bed Fusion (PBF) method is known as a way to obtain metal fabricated objects. The PBF method involves irradiating a layer of spread powder (powder bed) with an energy beam, such as a high-energy laser or electron beam, to sinter or melt and solidify the powder particles. By repeatedly layering and joining these layers, which are typically tens of microns thick, a three-dimensional additively manufactured object is obtained. The practical application of the L-PBF (Laser Powder Bed Fusion) method, which uses metal-based powders and a laser as the heat source, is also advancing. With the L-PBF method using metal-based powders such as Co-Cr alloy, titanium alloy, maraging steel, stainless steel, and nickel-based superalloys, the resulting additively manufactured objects exhibit high processing accuracy and product completeness. Additive manufactured objects that can be used in heat-resistant and high-temperature applications are also starting to be commercialized.

In the above-mentioned PBF method, a powder bed is formed by squeegeeing the metal powder. Here, squeegeeing refers to the process of forming a powder bed by supplying and laying the metal powder onto the stage of the three-dimensional fabrication equipment using a coater (such as a blade, doctor blade, brush, or roller), while simultaneously smoothing the surface of the powder bed and removing surplus metal powder. It can be said that forming a powder bed with a uniform distribution in the thickness direction is important for obtaining a dense and homogeneous metal fabricated object. Therefore, the metal powder used in the PBF method is required to have high flowability and packability so that a powder bed of uniform thickness can be formed by squeegeeing.

Regarding the metal powder used in the PBF method and the like, for example, Patent Document 1 discloses that a metal powder having a sphericity of 0.80 or more exhibits excellent flowability, and from this perspective, a sphericity of 0.83 or more is more preferred, and 0.85 or more is particularly preferred. Furthermore, Patent Document 2 describes the use of a metal powder having a uniformity represented by (d90-d10)/d50 of 1.5 or less, preferably 1.2 or less, and more preferably 1.1 or less, from the viewpoint of obtaining a powder bed of uniform thickness.

**[PRIOR ART DOCUMENTS]**

[PATENT DOCUMENTS]

    [Patent document 1] JP 2021-17639 A1

    [Patent document 2] WO 2020/179154 A1

**[SUMMARY OF INVENTION]**

According to the teachings of Patent Document 1, using metal powders with high sphericity that are close to true spheres is expected to improve flowability. However, our investigation has revealed an unexpected finding. In fact, metal powders with moderately irregular shapes exhibit superior flowability.

Accordingly, the object of the present invention is to provide a metal powder having high flowability and high packing property, which is capable of forming a powder bed with a uniform thickness by squeegeeing. Another object of the present invention is to provide a process for manufacturing the metal powder and a process for producing an additive manufactured object using the metal powder.

The inventors of the present invention obtained a metal powder having a predetermined particle size by classification, and found the following: a metal powder having an aspect ratio within a specific range and a degree of uniformity within a specific range exhibits higher flowability and higher packing property than a metal powder subjected to conventional classification, and is capable of forming a powder bed with a uniform thickness by squeegeeing. The present invention is based on such findings. The summary of the present invention is as follows.

[1] A metal powder for use in additive manufacturing, wherein

an aspect ratio of the metal powder, which is a value obtained by dividing a minor axis by a major axis, is 0.60 or more and 0.88 or less, and

a degree of uniformity of the metal powder, which is represented by the following formula, is 1.8 or less:

$$(d90 - d10) / d50$$

where d10, d50, and d90 are particle diameters corresponding to a cumulative frequency of 10 vol%, 50 vol%, and 90 vol%, respectively, in a volume-based cumulative particle size distribution curve measured by a laser diffraction particle size distribution measurement.

[2] The metal powder according to [1], wherein the degree of uniformity is 1.5 or less.

[3] The metal powder according to [1] or [2], wherein the degree of uniformity is 1.2 or less.

[4] The metal powder according to any one of [1] to [3], wherein the metal is at least one selected from a copper and a copper alloy.

[5] The metal powder according to any one of [1] to [4], wherein d50 is 10 $\mu$m or more and 50 $\mu$m or less.

[6] The metal powder according to [1] to [5], wherein

a particle diameter $d_{min}$ is 8 $\mu$m or more,

where $d_{min}$ corresponds to a cumulative frequency of 0 vol% in a cumulative distribution curve of particle diameters measured by a laser diffraction particle size distribution measurement.

[7] The metal powder according any one of [1] to [6], wherein an oxygen content is 3000 ppm or less on a mass basis.

[8] The metal powder according to any one of [1] to [7], wherein
in a number-based cumulative distribution curve of area solidity measured by a particle image analyzer, an area solidity corresponding to a cumulative frequency of 10% is 0.96 or less.

[9] A process for manufacturing the metal powder for use in additive manufacturing according to any one of [1] to [8], comprising:

preparing a metal powder from a molten metal by a gas atomization method; and

classifying the metal powder to remove particles on a large-diameter side and particles on a small-diameter side.

[10] The process according to [9], wherein the classification of the metal powder is performed in two stages, comprising:

removing one of the particles on the large-diameter side or the particles on the small-diameter side in a first stage; and

removing the other in a second stage.

[11] The process according to [9] or [10], wherein the removal of the particles on the large-diameter side is performed using a vibratory sieve or a swirling-type air flow classifier.

[12] The process according to any one of [9] to [11], wherein the removal of the particles on the small-diameter side is performed using a swirling-type air flow classifier having a rotating rotor.

[13] The process according to [12], wherein the removal of the particles on the small-diameter side is performed at a rotational speed of the rotating rotor of 200 rpm or more and 11,000 rpm or less.

[14] The process according to [12] or [13], wherein the removal of the particles on the small-diameter side is performed at an air flow rate of 1.0 m$^3$/min or more and 300.0 m$^3$/min or less.

[15] A process for producing an additive manufactured object using the metal powder according to any one of [1] to [8], comprising:

a first step of forming a powder bed comprising the metal powder; and

a second step of forming a modeled layer by solidifying the metal powder at a predetermined position in the powder bed,

wherein the first step and the second step are sequentially repeated to laminate the modeled layers thereby producing the additive manufactured object.

[16] The process according to [15], wherein the forming of the powder bed in the first step is performed by moving a coater to spread the metal powder, wherein a moving speed of the coater is 10 mm/sec or more and 800 mm/sec or less.

[17] The process according to [15] or [16], wherein a thickness of the powder bed formed in the first step is 0.01 mm or more and 0.5 mm or less.

[18] The process according to any one of [15] to [17], wherein

the solidification of the metal powder in the second step is performed by an energy irradiation means selected from the group consisting of a laser, an electron beam, and a plasma; and

the solidification of the metal powder is performed at an energy density of 40 J/mm$^3$ or more and 1000 J/mm$^3$ or less.

According to the present invention, by providing a metal powder having an aspect ratio within a specific range and a degree of uniformity within a specific range, the metal powder exhibits higher flowability and higher packing property than a metal powder subjected to conventional classification, thereby enabling the formation of a powder bed with a uniform thickness by squeegeeing. Further, since the metal powder having high flowability and high packing property can form a powder bed of uniform thickness even when the squeegeeing speed is increased, a dense additive manufactured object can be efficiently obtained.

**[DETAILED DESCRIPTION OF THE INVENTION]**

[Metal Powder]

The metal powder according to the present invention is used as a raw material powder in an additive manufacturing method. In the additive manufacturing method, the raw material powder is irradiated with an energy beam to be melted and then rapidly solidified through cooling; namely, the raw material powder is solidified by the irradiation with the energy beam. Details of the additive manufacturing method will be described later in a section titled "Process for Producing Additive Manufactured Object."

According to an embodiment of the present invention, a metal powder having an aspect ratio of 0.60 or more and 0.88 or less and a degree of uniformity of 1.8 or less is provided.

In the present invention, the aspect ratio of the metal powder is defined as a value (D/H) obtained by: measuring the metal powder with a particle image analyzer (Morphologi 4, manufactured by Malvern Panalytical Co., Ltd.) to obtain image data; determining the length (H) of the longest line segment (major axis) of a two-dimensional projected image of the metal powder and the length (D) of the longest line segment (minor axis) among line segments orthogonal to the major axis from the image data; and dividing D by H. The aspect ratio of the metal powder is an average value of aspect ratios calculated from the minor axis and the major axis by observing arbitrary 10,000 metal particles using the particle image analyzer.

In addition, in the present invention, the degree of uniformity of the metal powder is defined as a value represented by the following formula:

$$(d90 - d10) / d50$$

where d10, d50, and d90 are particle diameters corresponding to cumulative frequencies of 10 vol%, 50 vol%, and 90 vol%, respectively, in a cumulative volume distribution curve of particle diameters measured by laser diffraction particle size distribution measurement.

In the present invention, by using a metal powder having an aspect ratio within a specific range and a degree of uniformity within a specific range, high flowability and high packing property are achieved, making it possible to form a powder bed with a uniform thickness by squeegeeing. Although the reason for this is not entirely clear, it is presumed as follows. Theoretically, it is considered that the closer the shape of each individual particle is to a true sphere, the more the particles are packed at the highest density. However, in a mechanism involving the flowability of particles, such as in the case of squeegeeing, particles closer to true spheres rather exhibit poor flowability. It is instead considered that particles having moderately irregular shapes exhibit higher flowability, and as a result, the packing property of the spread metal powder also increases.

In the present invention, from the viewpoints of flowability and packing property, the aspect ratio of the metal powder is preferably 0.75 or more and 0.87 or less, and more preferably 0.80 or more and 0.85 or less.

Further, from the viewpoints of flowability and packing property, the degree of uniformity of the metal particles is preferably 1.5 or less, more preferably 1.2 or less, and particularly preferably 1.0 or less.

The d50 (i.e., median diameter) of the metal particles is preferably 1 $\mu$m or more and 500 $\mu$m or less, more preferably 5 $\mu$m or more and 200 $\mu$m or less, and particularly preferably 10 $\mu$m or more and 50 $\mu$m or less. By using a metal powder having a median diameter within the above range, a powder bed with a high packing density can be formed in a metal additive manufacturing method such as an L-PBF method, and the relative density of a modeled object obtained by sintering or melting and solidifying the metal powder can be increased.

In the metal powder of the present invention, a particle diameter $d_{min}$ corresponding to a cumulative frequency of 0 vol% in a cumulative volume distribution curve of particle diameters measured by laser diffraction particle size distribution measurement is preferably 4 $\mu$m or more, more preferably 6 $\mu$m or more, and particularly preferably 8 $\mu$m or more.

In the metal powder according to the present invention, an area solidity (solidity) is preferably 0.98 or less, and particularly preferably 0.96 or less. Further, a lower limit of the solidity is preferably 0.85 or more, and more preferably 0.88 or more. In the present invention, the area solidity (solidity) is an index indicating the frequency of irregularities on a particle surface and is defined as a ratio of a cross-sectional area of a particle to an area within an envelope. A lower solidity indicates a higher frequency of irregularities on the particle surface. That is, it is considered that in the metal powder, the flowability and packing property are improved, since individual particles have a certain degree of irregular shapes instead of being perfectly spherical. The solidity can be measured by a particle image analyzer (Morphologi 4, manufactured by Malvern Panalytical Co., Ltd.) and can be calculated by performing measurement on particles corresponding to a cumulative frequency of 10% in a number-based cumulative distribution curve. Specifically, the solidity can be obtained by: measuring an area (Sb) surrounded by a virtual envelope surrounding a two-dimensional profile of a metal particle and an area (Sa) surrounded by an actual outline of the two-dimensional profile of the metal particle from a two-dimensional projection; and calculating Sa / Sb.

The type of metal for the metal particles according to the present invention is not particularly limited, and any metal used for additive manufacturing, such as a PBF method, can be used without limitation. Examples thereof include powders of various metals such as carbon, boron, magnesium, calcium, chromium, copper, iron, manganese, molybdenum, cobalt, nickel, hafnium, niobium, titanium, and aluminum, and alloys thereof. Among these, copper or a copper alloy is preferable.

When copper or a copper alloy is used as the metal powder, it may contain inevitable impurity elements other than the metal elements constituting the copper or copper alloy, or may contain elements intentionally added during the manufacture of the metal powder. For example, inevitable impurity elements such as oxygen, phosphorus, and iron, or elements such as nickel, zinc, tin, silver, chromium, beryllium, zirconium, aluminum, silicon, cobalt, titanium, magnesium, and tellurium may be contained.

Even when oxygen is contained as an inevitable impurity element or an intentionally added element, the oxygen content is preferably 5000 ppm or less, and more preferably 3000 ppm or less, on a mass basis. By maintaining the oxygen content within the above range, the occurrence of spatter during laser irradiation is further suppressed. As a result, the composition becomes more stable, and the density of the obtained modeled object is further improved. The amount of oxygen contained in the metal powder can be quantitatively measured using an oxygen/nitrogen analyzer (EMGA-620, manufactured by HORIBA, Co., Ltd.) or the like, based on the amounts of CO and $CO_2$ generated when the metal powder is heated and melted in a He atmosphere.

According to the present invention, the flow rate of the metal particles measured in accordance with JIS Z 2502 is 18 sec/50 g or less, preferably 16 sec/50 g or less, and particularly preferably 15 sec/50 g or less.

[Process for Manufacturing Metal Powder]

Next, the process for manufacturing the metal powder described above will be explained. Metal powders are generally manufactured by, for example, a gas atomization method, a water atomization method, a disc atomization method, a plasma atomization method, a rotating electrode method, or the like. In the embodiment of the present invention, the metal powder is manufactured from a molten metal by the gas atomization method. The gas atomization method is a method for obtaining a powder by: heating and melting a melting raw material prepared to have a desired composition to a temperature equal to or higher than its melting point by high-frequency induction heating; allowing the molten metal to flow out through a fine pore; injecting an inert gas such as argon gas or nitrogen gas into the flowing molten metal to finely atomize (pulverize) the molten metal; and rapidly solidifying the atomized metal.

Subsequently, the metal powder obtained by the gas atomization method is classified and adjusted to have a predetermined aspect ratio and a predetermined degree of uniformity. The classification of the metal powder is preferably performed in two stages: removal of large-diameter particles and removal of small-diameter particles. When the classification is performed in two stages, the order of classification is not particularly limited; either the large-diameter particles or the small-diameter particles can be removed in the first stage, and the other can be removed in the second stage. In a preferred embodiment of the present invention, from the viewpoint of performing the classification more efficiently, it is preferable to first remove the large-diameter particles in the first stage and then remove the small-diameter particles in the second stage.

Classification of the metal powder is generally performed using a classification apparatus such as a vibrating sieve or an air flow classifier. In the embodiment of the present invention, a vibrating sieve or a swirling-type air flow classifier is preferably used for classification to remove large-diameter particles. Furthermore, an air flow classifier is preferably used for the classification to remove small-diameter particles. The air flow classifier is an apparatus that performs classification based on a difference in inertial force exerted on particles when air is injected as a carrier gas from a nozzle into a classification chamber. Among such apparatuses, a swirling-type air flow classifier, which classifies particles into coarse particles and fine particles based on a balance between a centrifugal force generated by the rotation of a rotary rotor and a centripetal force generated by an air flow, can be preferably used.

The swirling-type air flow classifier is equipped with a rotary rotor rotating at a high speed and classifying blades in a casing thereof. When the rotary rotor is rotated, a shear flow is generated in a gap between the casing and the classifying blades. When a powder material is fed into the shear flow, the powder material is subjected to deagglomeration (disintegration) by a shearing force while passing through the gap. After the deagglomeration, the particles are subjected to a centrifugal force generated by the rotary rotor and a drag force generated by the air flow from the classifying blades. At this time, since the centrifugal force and the drag force corresponding to the particle diameter act on the particles, coarse particles and fine particles are separated. Large-diameter particles (coarse particles) on which the centrifugal force acts strongly move to a coarse powder region, whereas small-diameter particles (fine particles) on which the drag force acts strongly move to a fine powder region. Therefore, in the swirling-type air flow classifier, by adjusting the rotational speed of the rotary rotor and the drag force (i.e., the amount of passing air), it is possible to classify the metal powder into one having a desired profile.

The present inventors have found that, when classifying metal powder using the above-described swirling-type air flow classifier to remove small-diameter particles, the small-diameter particles moving to the fine powder region have an aspect ratio close to 1, while the particles having a relatively large particle diameter moving to the coarse powder region have an aspect ratio smaller than 1. Based on this finding, the inventors adjusted the rotational speed of the rotary rotor and the amount of passing air of the swirling-type air flow classifier to remove the small-diameter particles having an aspect ratio close to 1, thereby succeeding in manufacturing a metal powder having the above-described aspect ratio and degree of uniformity. While not being bound by theory, it is considered that this is because, in the metal powder obtained by the gas atomization method, particles with smaller diameters have higher sphericity (aspect ratio closer to 1), whereas particles with larger diameters undergo partial pulverization or the like upon collision with the rotary rotor, resulting in the generation of particles with an aspect ratio smaller than 1.

When removing small-diameter particles in the classification of the metal powder using the swirling-type air flow classifier, the desired metal powder can be obtained by: setting the rotational speed of the rotary rotor to 200 rpm or more and 11000 rpm or less, preferably 400 rpm or more and 5000 rpm or less, and more preferably 500 rpm or more and 3500 rpm or less; and setting the air flow rate to 1.0 $m^3$/min or more and 300.0 $m^3$/min or less, preferably 4 $m^3$/min or more and 20 $m^3$/min or less, and more preferably 5 $m^3$/min or more and 10 $m^3$/min or less. As the swirling-type air flow classifier, for example, TC-25 (manufactured by Nisshin Engineering Co., Ltd.) can be used.

[Process for Producing Additive Manufactured Object]

Next, the process for producing an additive manufactured object using the above-described metal powder will be explained. The additive manufactured object can be produced by: forming a powder layer containing the metal powder (First Step); forming a modeled layer by solidifying the metal powder at a predetermined position in the powder layer (Second Step); and sequentially repeating the First Step and the Second Step to laminate the modeled layers. Hereinafter, specific embodiments will be described with reference to the drawings. Note that as a means for solidifying the metal powder, an embodiment using a laser in a powder bed fusion method will be described. However, the means is not limited to a laser as long as the metal powder can be solidified, and may be, for example, an electron beam, plasma, or the like. In the present embodiment, an additive manufacturing (AM) method other than the powder bed fusion method may be used. In the present embodiment, for example, a directed energy deposition method, a binder jetting method, a fused deposition modeling method, a cold spray method, or the like can also be used. Furthermore, in the present embodiment, cutting (machining) may be performed during modeling.

The additive manufactured object can be produced by an additive manufacturing apparatus. For example, three-dimensional (3D) shape data is created using a 3D scanner or the like. The 3D shape data serves as a design blueprint for the modeled object. By slicing the 3D shape data at predetermined intervals, slice data is created. The slicing interval is also referred to as a slice thickness. The slice data serves as a design blueprint for each modeled layer.

The additive manufacturing apparatus is also referred to as a "3D printer" or the like, and generally includes a piston, a table, and an output unit. The piston supports the table. The piston is capable of moving up and down.

The piston lowers the table by an amount corresponding to one layer of the slice data. A metal powder is spread on the table by a coater (such as a blade, a spatula, a brush, or a roller) to form a powder bed. During the spreading, the surface of the powder bed is smoothed by the coater, and excess metal powder is removed. The powder bed comprises the metal powder; for example, the powder bed may substantially consist of the metal powder. When forming the powder bed with the coater, a moving speed of the coater is preferably 10 mm/s or more and 800 mm/s or less, more preferably 10 mm/s or more and 500 mm/s or less, and particularly preferably 10 mm/s or more and 150 mm/s or less. According to the metal powder of the present invention, since the flowability and packing property of the metal powder are high, a powder bed having a uniform thickness can be formed even if the moving speed of the coater is relatively high. From the viewpoint that a powder bed having a uniform thickness can be formed by the coater, the thickness of the powder bed to be formed is preferably 0.01 mm or more and 0.5 mm or less, more preferably 0.01 mm or more and 0.2 mm or less, and particularly preferably 0.01 mm or more and 0.07 mm or less.

The output unit of the additive manufacturing apparatus irradiates the powder bed (metal powder) with an energy beam. The energy beam scans the inside of the powder bed in a predetermined pattern. The scanning pattern follows the slice data. The metal powder irradiated with the energy beam melts and then rapidly solidifies or sinters. That is, the metal powder irradiated with the energy beam solidifies. A modeled layer is formed according to the scanning pattern of the energy beam. The modeled layer is also referred to as a solidified layer, a consolidated layer, a sintered layer, a unit layer, or the like. Note that "solidification" refers to a state in which a group of metal particles fuse and become integrated, whereby the flowability of the group of metal particles is lost.

The energy beam may include, for example, at least one selected from the group consisting of a laser, an electron beam, and plasma. Specifically, the laser may include at least one selected from the group consisting of a Yb fiber laser, a YAG laser, a $CO_2$ laser, a semiconductor laser, a blue laser, and a green laser. The power of the energy beam may be, for example, 20 to 10000 W. The scanning speed of the energy beam may be, for example, 50 to 10000 mm/s. The energy density of the energy beam may be, for example, 40 to 1000 $J/mm^3$, preferably 60 to 800 $J/mm^3$, and more preferably 80 to 600 $J/mm^3$. According to the metal powder of the present invention, since the flowability and packing property of the metal powder are high, a powder bed having a uniform thickness (that is, a powder bed having excellent thermal conductivity) can be formed by squeegeeing. Therefore, when the powder bed is irradiated with the energy beam, the powder bed can be appropriately solidified even if the pitch interval for scanning the energy beam is widened or the scanning speed is increased. As a result, the energy density can be reduced.

After the modeled layer (first layer) is formed in this manner, the piston again lowers the table. The amount of lowering corresponds to one layer of the slice data. Similarly to the above, a modeled layer (second layer) is further formed, and the formation of the modeled layers is repeated, whereby an additive manufactured object is constructed. That is, by laminating a plurality of modeled layers, the additive manufactured object can be produced.

For example, the additive manufactured object may be produced in an inert gas atmosphere. By producing the additive manufactured object in an inert gas atmosphere, it is expected that oxidation of the modeled object is suppressed. The inert gas may include, for example, at least one selected from the group consisting of argon (Ar), nitrogen ($N_2$), and helium (He). For example, the additive manufactured object may be produced in a reducing gas atmosphere. The reducing gas may include, for example, hydrogen ($H_2$) or the like. For example, the additive manufactured object may be produced in a reduced pressure atmosphere.

The additive manufactured object can have an arbitrary shape. For example, it can have a complex internal structure seamlessly. It is considered difficult to form such a complex internal structure seamlessly by, for example, machining.

[EXAMPLES]

Next, embodiments of the present invention will be specifically described with reference to the following examples, but the present invention is not limited to these examples.

[Example 1]

<Manufacture of metal powder>

A copper alloy consisting of 2.4 % by mass of Cr and the balance Cu was melted, and a metal powder (copper alloy powder) was obtained by a gas atomization method. The obtained copper alloy powder was first classified using a vibrating sieve with a 53 $\mu$m mesh to remove large-diameter particles, and the powder on the small-diameter side (undersize powder) was collected. Subsequently, the collected powder was subjected to air classification using a high-speed rotor type classifier TC-25 (manufactured by Nisshin Engineering Co., Ltd.) to remove small-diameter particles. At that time, the rotational speed of the rotary rotor of the high-speed rotor type classifier was set to 990 rpm, and the amount of passing air was set to 8.5 $m^3$/min.

<Oxygen content of metal powder>

For the copper alloy powder obtained as described above, the oxygen content was measured using an oxygen/nitrogen analyzer (EMGA-620, manufactured by HORIBA, Co., Ltd.). The oxygen content was quantified from the amounts of CO and $CO_2$ generated when the metal powder was heated and melted in a He atmosphere.

<Particle diameter of metal powder>

For the copper alloy powder obtained as described above, a particle diameter corresponding to a cumulative volume frequency of 0% ($d_{min}$), a particle diameter corresponding to a cumulative volume frequency of 10% (d10), a particle diameter corresponding to a cumulative volume frequency of 50% (d50), and a particle diameter corresponding to a cumulative volume frequency of 90% (d90) were measured using a laser diffraction particle size distribution analyzer (MT-3300EX-II, manufactured by Microtrac Co., Ltd.). From the measurement results, the degree of uniformity (i.e., (d90 - d10) / d50) was calculated.

<Aspect ratio of metal powder>

For the copper alloy powder obtained as described above, the aspect ratio was determined by measuring the major axis and the minor axis from each of approximately 10,000 particle images acquired with a particle image analyzer (Morphologi 4, manufactured by Malvern Panalytical Co., Ltd.), and thus a value was calculated by dividing the major axis by the minor axis for each particle, and the average value of these calculated values was taken as the aspect ratio of the metal powder.

<Area solidity of metal powder>

As in a same manner, in a number-based cumulative distribution curve obtained using a particle image analyzer (Morphologi 4, manufactured by Malvern Panalytical Co., Ltd.), particles corresponding to a cumulative frequency of 10% were targeted for analysis. From the image data of these particles, an area (Sa) enclosed by the actual two-dimensional outline of the particle and an area (Sb) enclosed by a virtual convex hull line surrounding the two-dimensional outline were measured, and the area solidity (Sa / Sb) was calculated.

<Flow rate of metal powder>

For the copper alloy powder obtained as described above, the flow rate was measured using a powder flowmeter (manufactured by Tsutsui Rikagaku Kikai Co., Ltd.) in accordance with JIS Z 2502.

[Example 2]

A copper alloy consisting of 2.5 % by mass of Cr and the balance Cu was melted, and a copper alloy powder was obtained by a gas atomization method. This copper alloy powder was from a different batch produced under the same conditions as in Example 1. However, the particle size distribution of the copper alloy powder differed due to the difference in batches.
Using the obtained copper alloy powder, classification was performed in the same manner as in Example 1, and the oxygen content, particle diameter, aspect ratio, area solidity, and flow rate were measured. The measurement results are as shown in Table 1.

[Example 3]

A copper alloy consisting of 2.5 % by mass of Cr and the balance Cu was melted, and a copper alloy powder was obtained by a gas atomization method. This copper alloy powder was from a different batch produced under the same conditions as in Example 1. However, the particle size distribution of the copper alloy powder differed due to the difference in batches.
Using the obtained copper alloy powder, classification was performed in the same manner as in Example 1, and the oxygen content, particle diameter, aspect ratio, area solidity, and flow rate were measured. The measurement results are as shown in Table 1.

[Example 4]

A copper alloy consisting of 2.4 % by mass of Cr and the balance Cu was melted, and a copper alloy powder was obtained by a gas atomization method. This copper alloy powder was from a different batch produced under the same conditions as in Example 1. However, the particle size distribution of the copper alloy powder differed due to the difference in batches.
Using the obtained copper alloy powder, classification was performed in the same manner as in Example 1, and the oxygen content, particle diameter, aspect ratio, area solidity, and flow rate were measured. The measurement results are as shown in Table 1.

[Example 5]

A copper alloy consisting of 1.2 % by mass of Cr and the balance Cu was melted, and a copper alloy powder was obtained by a gas atomization method.
Using the obtained copper alloy powder, classification was performed in the same manner as in Example 1, and the oxygen content, particle diameter, aspect ratio, area solidity, and flow rate were measured. The measurement results are as shown in Table 1.

[Example 6]

A copper alloy consisting of 1.4 % by mass of Cr and the balance Cu was melted, and a copper alloy powder was obtained by a gas atomization method.
Using the obtained copper alloy powder, a metal powder was produced in the same manner as in Example 1, and the oxygen content, particle diameter, aspect ratio, area solidity, and flow rate were measured. The measurement results are as shown in Table 1.

[Example 7]

A copper alloy consisting of 2.3 % by mass of Cr and the balance Cu was melted, and a copper alloy powder was obtained by a gas atomization method. Classification was performed in the same manner as in Example 1, except that the rotational speed of the rotary rotor was changed to 500 rpm in the swirling-type air flow classifier during classification. Then, the oxygen content, particle diameter, aspect ratio, area solidity, and flow rate were measured. The measurement results are as shown in Table 1.

[Example 8]

A copper alloy powder was prepared from the same batch as in the gas atomization method in Example 7. Subsequently, a metal powder was manufactured in the same manner as in Example 7, except that the rotational speed of the rotary rotor was changed to 1200 rpm in the swirling-type air flow classifier during classification. Then, the oxygen content, particle diameter, aspect ratio, area solidity, and flow rate were measured. The measurement results are as shown in Table 1.

[Example 9]

A copper alloy powder was prepared from the same batch as in the gas atomization method in Example 7. Subsequently, a metal powder was manufactured in the same manner as in Example 7, except that the rotational speed of the rotary rotor was changed to 500 rpm and the amount of passing air was changed to 5.0 m$^3$ / min in the swirling-type air flow classifier during classification. Then, the oxygen content, particle diameter, aspect ratio, area solidity, and flow rate were measured. The measurement results are as shown in Table 1.

[Example 10]

A copper alloy consisting of 2.4 % by mass of Cr and the balance Cu was melted, and a copper alloy powder was obtained by a gas atomization method. A metal powder was manufactured in the same manner as in Example 1, except that the rotational speed of the rotary rotor was changed to 500 rpm and the amount of passing air was changed to 9.0 m$^3$/min in the swirling-type air flow classifier during classification. Then, the oxygen content, particle diameter, aspect ratio, area solidity, and flow rate were measured. The measurement results are as shown in Table 1.

[Example 11]

A copper alloy powder was prepared from the same batch as in the gas atomization method in Example 10. Subsequently, a metal powder was manufactured in the same manner as in Example 10, except that the rotational speed of the rotary rotor was changed to 1200 rpm and the amount of passing air was changed to 9.0 m$^3$ / min in the swirling-type air flow classifier during classification. Then, the oxygen content, particle diameter, aspect ratio, area solidity, and flow rate were measured. The measurement results are as shown in Table 1.

[Comparative Example 1]

A copper alloy powder was prepared from the same batch as in the gas atomization method in Example 1. Subsequently, a metal powder was manufactured in the same manner as in Example 1, except that, instead of classification using the swirling-type air flow classifier, a vibrating sieve (KGO-500-1DB, manufactured by Kowa Kogyosho Co., Ltd.) was used, and classification was performed such that $d_{min}$, d10, d50, and d90 were comparable to those in Example 1. Then, the oxygen content, particle diameter, aspect ratio, area solidity, and flow rate were measured. The measurement results are as shown in Table 1.

[Comparative Example 2]

A copper alloy powder was prepared from the same batch as in the gas atomization method in Example 2. Subsequently, a metal powder was manufactured in the same manner as in Example 2, except that small-diameter particles moved to the fine powder region were not removed during classification by the swirling-type air flow classifier. Then, the oxygen content, particle diameter, aspect ratio, area solidity, and flow rate were measured. The measurement results are as shown in Table 1.

[Comparative Example 3]

A copper alloy powder was prepared from the same batch as in the gas atomization method in Example 4. Subsequently, a metal powder was manufactured in the same manner as in Example 4, except that small-diameter particles moved to the fine powder region were not removed during classification by the swirling-type air flow classifier. Then, the oxygen content, particle diameter, aspect ratio, area solidity, and flow rate were measured. The measurement results are as shown in Table 1.

[Table 1]

| | Powder Preparing process | Classification method | Rotational speed of rotary rotor (rpm) | Amount of passing air (m³/min) | Particle size distribution | | | | Degree of Uniformity (d90-d10) / d50 | Aspect ratio | Area solidity | Oxygen concentration (ppm) | Flow rate (sec/50g) |
|---|---|---|---|---|---|---|---|---|---|---|---|---|---|
| | | | | | dmin (μm) | d10 (μm) | d50 (μm) | d90 (μm) | | | | | |
| Example 1 | Gas atomi-zation | Swirling air flow type | 990 | 8.5 | 15.6 | 28.1 | 39.7 | 56.9 | 0.72 | 0.88 | 0.94 | 128 | 14.3 |
| Example 2 | Gas atomization | Swirling air flow type | 990 | 8.5 | 11.0 | 22.9 | 34.1 | 51.2 | 0.83 | 0.83 | 0.93 | 168 | 13.6 |
| Example 3 | Gas atomization | Swirling air flow type | 990 | 8.5 | 11.0 | 22.0 | 32.7 | 49.7 | 0.85 | 0.84 | 0.94 | 211 | 13.8 |
| Example 4 | Gas atomization | Swirling air flow type | 990 | 8.5 | 13.1 | 23.9 | 34.9 | 51.5 | 0.79 | 0.85 | 0.95 | 334 | 12.6 |
| Example 5 | Gas atomization | Swirling air flow type | 990 | 8.5 | 11.0 | 23.0 | 33.9 | 50.8 | 0.82 | 0.79 | 0.88 | 136 | 13.8 |
| Example 6 | Gas atomization | Swirling air flow type | 990 | 8.5 | 13.1 | 23.2 | 35.1 | 54.7 | 0.90 | 0.77 | 0.90 | 1417 | 14.6 |
| Example 7 | Gas atomization | Swirling air flow type | 500 | 8.5 | 5.5 | 19.6 | 31.4 | 48.1 | 0.91 | 0.86 | 0.96 | 189 | 14.7 |
| Example 8 | Gas atomization | Swirling air flow type | 1200 | 8.5 | 9.3 | 20.6 | 36.9 | 54.0 | 0.91 | 0.86 | 0.90 | 204 | 15.3 |
| Example 9 | Gas atomization | Swirling air flow type | 500 | 5.0 | 9.3 | 28.2 | 39.6 | 56.6 | 0.72 | 0.87 | 0.93 | 156 | 14.2 |
| Example 10 | Gas atomization | Swirling air flow type | 500 | 9.0 | 6.5 | 18.5 | 36.3 | 53.7 | 0.97 | 0.88 | 0.95 | 214 | 14.8 |
| Example 11 | Gas atomization | Swirling air flow type | 1200 | 9.0 | 9.3 | 20.4 | 32.4 | 49.4 | 0.90 | 0.86 | 0.90 | 235 | 14.9 |
| Comparative Example 1 | Gas atomization | Vibrating sieve | - | - | 13.1 | 26.2 | 39.0 | 58.5 | 0.83 | 0.89 | 0.94 | 150 | 19.5 |
| Comparative Example 2 | Gas atomization | No removal of fine particles | - | - | 4.6 | 14.3 | 32.6 | 53.9 | 1.21 | 0.89 | 0.97 | 179 | 18.4 |

(continued)

| | Powder Preparing process | Classification method | Rotational speed of rotary rotor (rpm) | Amount of passing air (m³/min) | Particle size distribution | | | | Degree of Uniformity (d90-d10) / d50 | Aspect ratio | Area solidity | Oxygen concentration (ppm) | Flow rate (sec/50g) |
|---|---|---|---|---|---|---|---|---|---|---|---|---|---|
| | | | | | dmin (μm) | d10 (μm) | d50 (μm) | d90 (μm) | | | | | |
| Comparative Example 3 | Gas atomization | No removal of fine particles | - | - | 5.5 | 15.0 | 31.1 | 51.9 | 1.18 | 0.90 | 0.97 | 361 | 17.8 |

**Claims**

1. A metal powder for use in additive manufacturing, wherein

   an aspect ratio of the metal powder, which is a value obtained by dividing a minor axis by a major axis, is 0.60 or more and 0.88 or less, and
   a degree of uniformity of the metal powder, which is represented by the following formula, is 1.8 or less:

$$(d90 - d10) / d50$$

   where d10, d50, and d90 are particle diameters corresponding to a cumulative frequency of 10 vol%, 50 vol%, and 90 vol%, respectively, in a volume-based cumulative particle size distribution curve measured by a laser diffraction particle size distribution measurement.

2. The metal powder according to claim 1, wherein the degree of uniformity is 1.5 or less.

3. The metal powder according to claim 1, wherein the degree of uniformity is 1.2 or less.

4. The metal powder according to claim 1, wherein the metal is at least one selected from a copper and a copper alloy.

5. The metal powder according to claim 1, wherein d50 is 10 $\mu$m or more and 50 $\mu$m or less.

6. The metal powder according to claim 1, wherein

   a particle diameter $d_{min}$ is 8 $\mu$m or more,
   where $d_{min}$ corresponds to a cumulative frequency of 0 vol% in a cumulative distribution curve of particle diameters measured by a laser diffraction particle size distribution measurement.

7. The metal powder according to claim 1, wherein an oxygen content is 3000 ppm or less on a mass basis.

8. The metal powder according to claim 1, wherein
   in a number-based cumulative distribution curve of area solidity measured by a particle image analyzer, an area solidity corresponding to a cumulative frequency of 10% is 0.96 or less.

9. A process for manufacturing the metal powder for use in additive manufacturing according to claim 1, comprising:

   preparing a metal powder from a molten metal by a gas atomization method; and
   classifying the metal powder to remove particles on a large-diameter side and particles on a small-diameter side.

10. The process according to claim 9, wherein the classification of the metal powder is performed in two stages, comprising:

    removing one of the particles on the large-diameter side or the particles on the small-diameter side in a first stage; and
    removing the other in a second stage.

11. The process according to claim 9, wherein the removal of the particles on the large-diameter side is performed using a vibratory sieve or a swirling-type air flow classifier.

12. The process according to claim 9, wherein the removal of the particles on the small-diameter side is performed using a swirling-type air flow classifier having a rotating rotor.

13. The process according to claim 12, wherein the removal of the particles on the small-diameter side is performed at a rotational speed of the rotating rotor of 200 rpm or more and 11,000 rpm or less.

14. The process according to claim 12, wherein the removal of the particles on the small-diameter side is performed at an air flow rate of 1.0 m$^3$/min or more and 300.0 m$^3$/min or less.

15. A process for producing an additive manufactured object using the metal powder according to any one of claims 1 to 8, comprising:

a first step of forming a powder bed comprising the metal powder; and
a second step of forming a modeled layer by solidifying the metal powder at a predetermined position in the powder bed,
wherein the first step and the second step are sequentially repeated to laminate the modeled layers thereby producing the additive manufactured object.

16. The process according to claim 15, wherein the forming of the powder bed in the first step is performed by moving a coater to spread the metal powder, wherein a moving speed of the coater is 10 mm/sec or more and 800 mm/sec or less.

17. The process according to claim 15, wherein a thickness of the powder bed formed in the first step is 0.01 mm or more and 0.5 mm or less.

18. The process according to claim 15, wherein

the solidification of the metal powder in the second step is performed by an energy irradiation means selected from the group consisting of a laser, an electron beam, and a plasma; and
the solidification of the metal powder is performed at an energy density of 40 $J/mm^3$ or more and 1000 $J/mm^3$ or less.

## INTERNATIONAL SEARCH REPORT

| International application No. |
|---|
| **PCT/JP2024/023867** |

### A. CLASSIFICATION OF SUBJECT MATTER

*B22F 1/06*(2022.01)i; *B22F 1/00*(2022.01)i; *B22F 1/052*(2022.01)i; *B22F 9/08*(2006.01)i; *B22F 10/28*(2021.01)i; *B22F 10/34*(2021.01)i; *B33Y 10/00*(2015.01)i; *B33Y 70/00*(2020.01)i; *C22C 9/00*(2006.01)i

FI: B22F1/06; B22F1/00 L; B22F1/052; B22F9/08 A; B22F10/28; B22F10/34; B33Y10/00; B33Y70/00; C22C9/00

According to International Patent Classification (IPC) or to both national classification and IPC

### B. FIELDS SEARCHED

Minimum documentation searched (classification system followed by classification symbols)

B22F1/06; B22F1/00; B22F1/052; B22F9/08; B22F10/28; B22F10/34; B33Y10/00; B33Y70/00; C22C9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-172242 A (MITSUI MINING & SMELTING CO., LTD.) 15 November 2022 (2022-11-15)<br>claims, paragraph [0041], table 1, examples 1-5, 8 | 1-8 |
| A | WO 2020/179388 A1 (HITACHI METALS, LTD.) 10 September 2020 (2020-09-10) | 1-18 |
| A | JP 2015-143376 A (SEIKO EPSON CORPORATION) 06 August 2015 (2015-08-06) | 1-18 |
| A | JP 2020-094271 A (MEC COMPANY LTD.) 18 June 2020 (2020-06-18) | 9-18 |

☐ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **05 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| PCT/JP2024/023867 |

| Patent document cited in search report | | | Publication date (day/month/year) | Patent family member(s) | | | Publication date (day/month/year) |
|---|---|---|---|---|---|---|---|
| JP | 2022-172242 | A | 15 November 2022 | WO | 2019/017467 | A1 | |
| WO | 2020/179388 | A1 | 10 September 2020 | US | 2022/0143690 | A1 | |
| | | | | EP | 3936257 | A1 | |
| | | | | CN | 113490560 | A | |
| JP | 2015-143376 | A | 06 August 2015 | US | 2015/0217371 | A1 | |
| | | | | CN | 104815979 | A | |
| JP | 2020-094271 | A | 18 June 2020 | US | 2021/0387255 | A1 | |
| | | | | WO | 2020/116349 | A1 | |
| | | | | EP | 3892400 | A1 | |
| | | | | CN | 113165065 | A | |
| | | | | TW | 202031905 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021017639 A

- WO 2020179154 A1